# EUROPÄISCHE PATENTSCHRIFT

(11) **EP 1 520 640 B1**
(45) Veröffentlichungstag und Bekanntmachung des Hinweises auf die Patenterteilung: **16.05.2007**
(21) Anmeldenummer: 04020489.3
(22) Anmeldetag: 28.08.2004
(51) Int. Cl.: B21D 43/05, B23Q 7/04

(54) **Vorrichtung zum Transport von Werkstücken**
Apparatus for transporting workpieces
Dispositif de transport de pièces à usiner

(30) Priorität: 01.10.2003 DE 10345685
(43) Veröffentlichungstag der Anmeldung: 06.04.2005
(73) Patentinhaber: Schuler Automation GmbH & Co. KG, 91093 Hessdorf (DE)
(72) Erfinder: Cisar, Rolf, Dipl.-Ing., 91238 Engelthal (DE)
(74) Vertreter: Gassner, Wolfgang

(56) Entgegenhaltungen:
- EP-A- 0 633 077
- DD-A- 253 797
- DE-A- 2 847 273
- DE-A- 2 852 929
- DE-A- 19 819 277
- US-A- 3 590 986
- US-A- 5 975 284
- DATABASE WPI Derwent Publications Ltd., London, GB; AN 1983-775649 XP002314353 -& SU 977 087 A (ENERGOTEKHPROM PROD) 30. November 1982 (1982-11-30)

## Beschreibung

Die Erfindung betrifft eine Vorrichtung zum Transport von Werkstücken nach dem Oberbegriff des Anspruchs 1. Sie betrifft insbesondere eine Vorrichtung zum schrittweisen Vorschub von Werkstücken in Pressen.

Eine solche Vorrichtung ist aus der EP 0 633 077 A1 bekannt. Dabei sind die Transportbalken an Hebeln gehalten. Die Hebel sind an ihrem einen Ende in am Transportbalken vorgesehenen Gleitführungen geführt und an ihren anderen Enden in ortsfesten Schwenklagern gehalten. Die Transportbalken sind mittels einer damit verbundenen Greifertraverse in Transport- bzw. X-Richtung und in einer senkrecht dazu verlaufenden Y-Richtung bewegbar. - Bei einem klemmenden Transport kommt es in der Praxis zu einer Durchbiegung der Transportbalken. Das kann zu einem unerwünschten Herausfallen und/oder Durchrutschen von Werkstücken führen. Das Vorsehen der zur Bewegung der Transportbalken in Transportrichtung erforderlichen Greifertraversen und des dazugehörigen Antriebs erfordert einen hohen Platzbedarf.

Aus der DE 28 52 929 ist eine Vorschubeinrichtung zum schrittweisen Werkstücktransport in Pressen bekannt, bei der sich längs des Transportwegs zwei Greiferschienen bzw. Transportbalken in einander gegenüberliegender Anordnung erstrekken. Zum Greifen der Werkstücke werden die Greiferschienen über ein Zahnradgetriebe aufeinander zu bewegt, bis die Werkstücke klemmend gehalten sind. Anschließend werden die Greiferschienen in Transportrichtung bewegt und die Werkstücke durch Auseinanderbewegen der Greiferschienen an einem anderen Ort wieder abgesetzt. Um stets einen synchronen Bewegungsablauf sicherzustellen, werden die Bewegungen des Zahnradgetriebes über Kurvenscheiben gesteuert. - Die bekannte Vorschubeinrichtung erfordert einen hohen Herstellungsaufwand. Sie ist nicht modular aufgebaut. Für jede Pressengeometrie ist eine daran angepasste neue Konstruktion erforderlich.

Aus der DE 28 47 273 ist eine Vorrichtung zum Beschicken einer Plattenpresse bekannt. Dabei sind zwei einander gegenüberliegende Beschickholme bzw. Transportbalken jeweils auf Schlitten in Transportrichtung bewegbar. Jeder der Transportbalken ist mittels eines Scherenstelltriebs in eine Richtung senkrecht zur Transportrichtung bewegbar. An jedem der Transportbalken sind mehrere Greifeinrichtungen vorgesehen. Die Greifeinrichtungen weisen Klemmleistenpaare auf, die über Parallelogrammlenkerstelltriebe vertikal gegeneinander bewegbar sind. - Die bekannte Vorrichtung erfordert eine Vielzahl von Antriebseinrichtungen. So sind Antriebseinrichtungen zur Bewegung der Schlitten in Transportrichtung, zur Bewegung der Transportbalken senkrecht zur Transportrichtung sowie zur Bewegung der Greifeinrichtungen erforderlich.

Aus der US 3,590,986 ist eine Transportvorrichtung für Werkstücke bekannt, bei der zwei einander gegenüberliegende Transportbalken gleichmäßig aufeinander zu bzw. voneinander weg bewegbar sind. Dazu ist jeder der Transportbalken endständig jeweils mit einem Lenker an einem Umlenkhebel angebracht. Durch eine Bewegung der Umlenkhebel kann eine Bewegung der Transportbalken in Y-Richtung erzeugt werden. Zur Bewegung der Transportbalken in eine Transportrichtung ist eine gesonderte Vorrichtung vorgesehen, mit der die parallel zur Transportrichtung in Gleitführungen gehaltenen Transportbalken bewegbar sind.

Die US 5,975,284 offenbart eine Transportvorrichtung, bei der einander gegenüberliegende Transportbalken an in X- und Y-Richtung bewegbaren Tischen angebracht sind. Zur Bewegung der Tische sind gleitbar in Ausnehmungen der Tische geführte Schwingarme vorgesehen. Eine prinzipiell ähnlich ausgestaltete Vorrichtung zum Transport von Werkstücken ist auch aus der DD 253 797 A1 bekannt

Die SU-A-977 087 offenbart einen Tisch, der über federbelastete Parallelogrammstellhebel gegen einen Untergrund abgestützt ist.

Die DE 198 19 277 A1 beschreibt eine Transfereinrichtung zum Transport von Werkstücken, bei denen Tragschienen jeweils mittels dreier gelenkig angebrachter Parallelstäbe gehalten sind.

Aufgabe der Erfindung ist es, die Nachteile nach dem Stand der Technik zu beseitigen. Es soll insbesondere eine einfach und kostengünstig herstellbare Vorrichtung zum Transport von Werkstücken angegeben werden, welche eine präzise und sichere Aufnahme sowie einen präzisen Transport von Werkstücken ermöglicht. Nach einem weiteren Ziel der Erfindung soll die Vorrichtung möglichst so ausgestaltet sein, dass sie ohne großen Aufwand an unterschiedliche Geometrien von Bearbeitungsvorrichtungen, wie Pressen oder dgl., angepasst werden kann.

Diese Aufgabe wird durch die Merkmale des Anspruchs 1 gelöst. Zweckmäßige Ausgestaltungen ergeben sich aus den Merkmalen der Ansprüche 2 bis 16.

Nach Maßgabe der Erfindung ist vorgesehen, dass der Transportbalken mittels mindestens eines ersten und eines zweiten Parallelogrammstelltriebs bewegbar gehalten ist, wobei jeder der Parallelogrammstelltriebe in gegenüberliegender Anordnung ein erstes Koppelelement und ein am Transportbalken angebrachtes oder einen Bestandteil des Transportbalken bildendes zweites Koppelelement aufweist, welche über zumindest zwei parallel angebrachte Lenker bewegbar miteinander verbunden sind, und wobei die ersten und/oder zweiten Koppelelemente mittels einer Linearbewegungseinrichtung relativ zueinander in X-Richtung bewegbar sind, so dass zur Erzeugung einer Bewegung des Transportbalkens in Y-Richtung die Lenker des ersten Parallelogrammstelltriebs entgegengesetzt zu den Lenkern des zweiten Parallelogrammstelltriebs verschwenkbar sind.

Unter der "X-Richtung" wird im Sinne der Erfindung üblicherweise die Transportrichtung verstanden. Es kann sich dabei um z. B. eine horizontale oder um eine vertikale Richtung handeln.

Indem erfindungsgemäß der Transportbalken mittels mindestens zweier Parallelogrammstelltriebe gehalten und zur Erzeugung einer Bewegung des Transportbalkens die Lenker der Parallelogrammstelltriebe in entgegengesetzte Richtungen zu verschwenken sind, wird eine erheblich verbesserte Steifigkeit der Aufnahme des Transportbalkens erzielt. Die Lenker sind so angeordnet, dass damit der Transportbalken stabil gegenüber einer aufgebrachten Last gehalten ist. Die Bewegungen des Transportbalkens können mit hoher Präzision durchgeführt werden. Bei den Parallelogrammstelltrieben sind die Schwenklager der Lenker ortsfest an den Koppelelementen angebracht. Bei einer Bewegung der Koppelelemente relativ zueinander verschwenken die Lenker jeweils um denselben Winkelbetrag. Eine von den Lenkern und den Koppelelementen umschlossene Fläche bildet ein Parallelogramm.

Der Begriff "Koppelelement" ist im Sinne der vorliegenden Erfindung allgemein zu verstehen. Es kann sich dabei um einen starren Balken handeln, der mit dem Transportbalken oder einer Linearbewegungseinrichtung verbunden sein kann. Das Koppelelement kann auch Bestandteil des Transportbalkens oder einer Linearbewegungseinrichtung sein.

Als vorteilhaft hat es sich erwiesen, dass das erste Koppelelement an einer Linearbewegungseinrichtung angebracht oder Bestandteil derselben ist. Indem das erste Koppelelement an einer Linearbewegungseinrichtung angebracht oder Bestandteil desselben ist, wird vorteilhafterweise erreicht, dass durch eine Bewegung der Gleitelemente relativ zueinander allein in X-Richtung eine Bewegung des Transportbalkens in X- und in Y-Richtung erreicht werden kann.

Das erste Koppelelement kann ein erstes Gleitelement der Linearbewegungseinrichtung bilden. Die Linearbewegungseinrichtung ist zweckmäßigerweise am Gestell angebracht. Das vereinfacht die Konstruktion der Vorrichtung. Es können insbesondere Antriebseinrichtungen ortsfest am Gestell angeordnet werden.

Unter einer "Linearbewegungseinrichtung" wird eine Einrichtung verstanden, mittels derer ein Gegenstand mit einem weiteren Gegenstand so verbunden ist, dass eine Bewegung der beiden Gegenstände relativ zueinander zwangsläufig entlang einer Gerade erfolgt. Dazu kann beispielsweise ein Gleitelement gleitbar auf einer geraden Schiene vorgesehen sein. Die Gleitelemente können aber auch in linearen Gleit- oder Wälzlagern geführt sein.

Nach einer weiteren vorteilhaften Ausgestaltung weist die Linearbewegungseinrichtung ein senkrecht zur Bewegungsrichtung des ersten Gleitelements bewegbares zweites Gleitelement auf, an welchem das erste Gleitelement angebracht ist. Beim ersten und/oder zweiten Gleitelement kann es sich um auf einer Linearführung geführte Schlitten handeln. Zweckmäßigerweise sind das erste und das zweite Gleitelement nach Art eines Kreuzschlittens ausgebildet. Das ermöglicht eine Bewegung des Transportbalkens in X-, Y- und Z-Richtung.

Nach einer weiteren Ausgestaltung ist mindestens eine erste Antriebsvorrichtung zur Bewegung des ersten und/oder zweiten Gleitelements, vorzugsweise in Z-Richtung, vorgesehen. Ferner kann mindestens eine zweite Antriebseinrichtung zur Bewegung des ersten und/oder zweiten Gleitelements, vorzugsweise in X-Richtung, vorgesehen sein. Es kann auch zur Bewegung jedes der zweiten Gleitelemente eine separate zweite Antriebseinrichtung vorgesehen sein. Damit kann auf einfache Weise durch eine geeignete Steuerung der Antriebseinrichtung/en eine vorgegebene Bewegung des Transportbalkens sowohl in X- als auch in Y-Richtung ausgeführt werden. Die Bewegung kann zweckmäßigerweise mittels eines zur Steuerung der Antriebseinrichtung/en vorgesehenen Prozessrechners gesteuert werden. Das ermöglicht eine besonders einfache Anpassung der erfindungsgemäßen Vorrichtung an die verschiedensten Geometrien von Bearbeitungsvorrichtungen, z. B. Pressen. Sie eignet sich zum Nachrüsten bestehender Bearbeitungsvorrichtungen. Zur Anpassung an verschiedene Geometrien ist es erfindungsgemäß lediglich erforderlich, die Länge des Transportbalkens geeignet zu wählen. Die Linearbewegungseinrichtungen samt Antriebseinrichtung/en können unverändert bleiben.

Zweckmäßigerweise sind das erste und/oder zweite Gleitelement mittels eines Zahnriemens mit der ersten und/oder der zweiten Antriebseinrichtung verbunden. Die Verbindung kann anstelle des Zahnriemens auch mittels einer Gewindespindel, einer Zahnstange oder dgl. erfolgen. Als besonders vorteilhaft hat sich die Verwendung von Linearmotoren erwiesen. Dabei können z.B. die in X-Richtung bewegbaren Gleitelemente als Primärteile ausgebildet sein, welche auf einem einzigen Sekundärteil gleitbar gehalten sind. In diesem Fall kann eine einzige Gleitführung zur Aufnahme mehrerer Gleitelemente verwendet werden.

Nach einem weiteren vorteilhaften Ausgestaltungsmerkmal sind die erste und die zweite Antriebseinrichtung außerhalb des ersten bzw. des zweiten Schlittens vorgesehen. Damit kann die zu bewegende Masse, nämlich die Masse des Gleitelements, klein gehalten werden. Die Bewegungen können mit einer hohen Beschleunigung erfolgen. Die Werkstücke können mit der erfindungsgemäßen Vorrichtung besonders schnell und effizient transportiert werden.

Nach einer weiteren Ausgestaltung ist das zweite Koppelelement linear bewegbar am Transportbalken angebracht. In diesem Fall kann das zweite Koppelelement als weiteres Gleitelement ausführt sein, welches z. B. den Transportbalken zumindest abschnittsweise umgreift. Ein solches weiteres Gleitelement kann mit einer weiteren Antriebsvorrichtung versehen sein, welche eine Bewegung des weiteren Gleitelements relativ zum Transportbalken ermöglicht.

Die ersten Lenker können an einem ersten Ende und/oder die zweiten Lenker an einem zweiten Ende des Transportbalkens angebracht sein. Wegen des erfindungsgemäßen Vorsehens von Parallelogrammstelltrieben zur Bewegung des Transportbalkens ist die Durchbiegung desselben auch in diesem Fall drastisch verringert. Die Anbringung der Lenker an den Enden des Transportbalkens eröffnet neue Freiheiten in der Konstruktion.

Nach einer weiteren Ausgestaltung sind am Transportbalken Greifeinrichtungen zum Greifen der zu transportierenden Werkstücke vorgesehen. Es kann sich dabei um herkömmliche Aktiv-Greifelemente handeln. Derartige Greifelemente sind insbesondere dann vorgesehen, wenn die erfindungsgemäße Vorrichtung lediglich eine Transporteinrichtung aufweist.

Vorteilhafterweise ist zumindest eine Gleitführung zur Aufnahme der ersten und/oder zweiten Gleitelemente vorgesehen. Bei den Gleitelementen handelt es sich insbesondere um die in X-Richtung bewegbaren Gleitelemente. Durch das Vorsehen einer einzigen Gleitführung kann erreicht werden, dass die Gleitelemente in X-Richtung in einer gemeinsamen Ebene linear bewegbar sind.

Zweckmäßigerweise ist/sind die Gleitführung/en am Gestell einer Bearbeitungsvorrichtung angebracht. Dabei kann es sich um eine Presse oder dgl. handeln. Es ist möglich, die Gleitführung/en innerhalb des Gestells oder außerhalb am Gestell anzubringen.

Nach einer weiteren Ausgestaltung ist gegenüberliegend der ersten Transporteinrichtung, vorzugsweise in spiegelbildlicher Anordnung, eine weitere Transporteinrichtung mit den vorbeschriebenen Merkmalen angeordnet. Die Bewegungen der Transporteinrichtungen werden in diesem Fall vorteilhafterweise so gesteuert, dass zwischen den Transportbalken die Werkstücke klemmend gegriffen werden können.

Das Vorsehen der vorgeschlagenen Parallelogrammlenkerstelltriebe trägt zu einer drastischen Erhöhung der Steifigkeit des Transportbalkens bei. Im Fall der Verwendung zweier einander gegenüberliegender Transporteinrichtungen kann der Schließdruck erhöht werden. Ein Herausfallen und/oder Durchrutschen von Werkstücken beim Transport wird damit sicher vermieden. Bei der Verwendung lediglich einer Transporteinrichtung, insbesondere mit Aktiv-Greifelementen, kann ein besonders präziser und dynamischer Bewegungsablauf gewährleistet werden.

Nachfolgend werden Ausführungsbeispiele der Erfindung anhand der Zeichnung näher erläutert. Es zeigen:
- Fig. 1: eine Seitenansicht eines Antriebsmoduls,
- Fig. 2: eine Schnittansicht einer Antriebsmoduls gemäß Fig. 1,
- Fig. 3: eine Seitenansicht einer Presse mit einer ersten Vorrichtung,
- Fig. 4: eine Schnittansicht gemäß Fig. 3 gemäß der Schnittlinie A - A',
- Fig. 5a - d: den Bewegungsablauf bei einer zweiten Vorrichtung,
- Fig. 6a - d: den Bewegungsablauf bei einer dritten Vorrichtung,
- Fig. 7a - d: den Bewegungsablauf bei einer vierten Vorrichtung,
- Fig. 8a - d: den Bewegungsablauf bei einer fünften Vorrichtung,
- Fig. 9: eine Prinzipskizze einer sechsten Vorrichtung,
- Fig. 10a: eine Prinzipskizze der Anordnung der zweiten oder dritten Vorrichtung,
- Fig. 10b: die Anordnung gemäß Fig. 10a mit einer alternativen Stellung der Lenker,
- Fig. 11a: eine Prinzipskizze der Anordnung der vierten Vorrichtung,
- Fig. 11b: die Anordnung gemäß Fig. 11a mit einer alternativen Stellung der Lenker,
- Fig. 12a - d: Prinzipskizzen des Bewegungsablaufs, wie er in den Fig. 7a - d gezeigt ist.

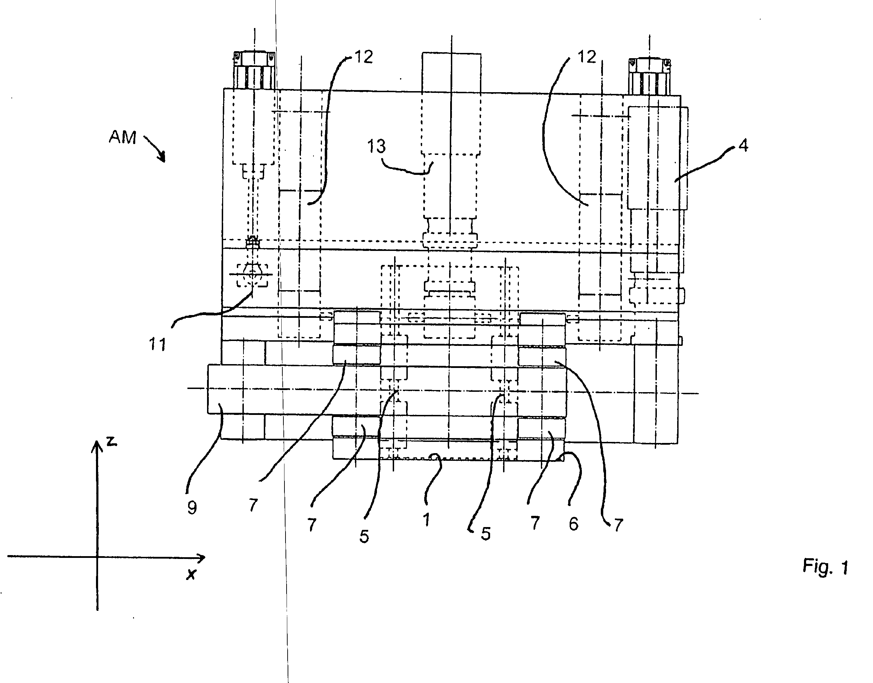

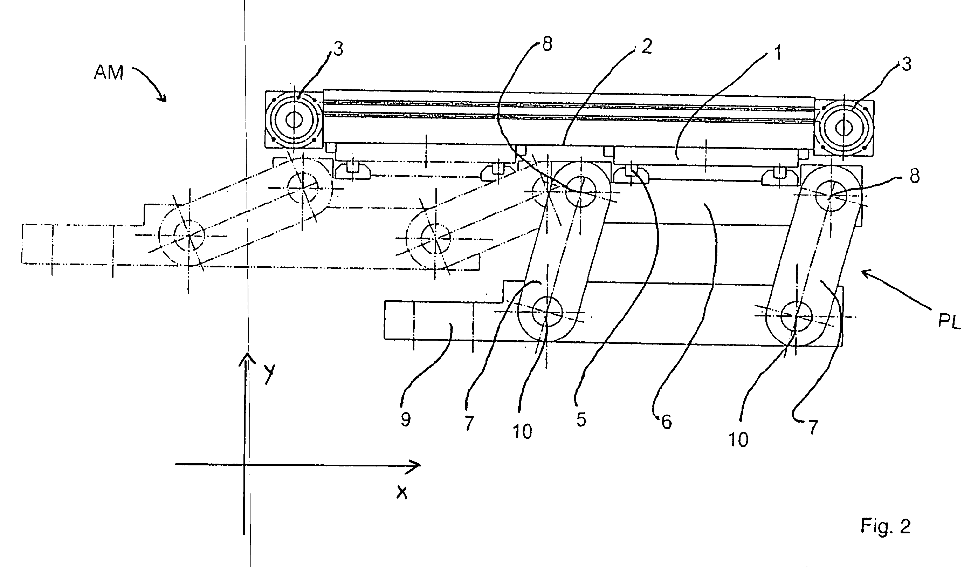

Die Fig. 1 und 2 zeigen ein zur Herstellung einer erfindungsgemäßen Transporteinrichtung geeignetes Antriebsmodul AM. Ein erster Schlitten 1 ist z. B. über einen Zahnriemen 2 mit Zahnscheiben 3 verbunden. Eine der beiden Zahnscheiben 3 ist mit einem ersten Elektromotor 4 antriebsmäßig verbunden. Der erste Schlitten 1 ist in einer (hier nicht gezeigten) in X-Richtung verlaufenden X-Schiene geführt, die sich über den zwischen den Zahnscheiben 3 gebildeten Abstand erstreckt. Am ersten Schlitten 1 sind in Z-Richtung verlaufende Z-Schienen 5 angebracht, in denen ein zweiter Schlitten 6 geführt ist. Der erste 1 und der zweite Schlitten 6 bilden einen Kreuzschlitten. Am zweite Schlitten 6 sind schwenkbar Lenker 7 angebracht. Die Lenker 7 sind an ihrem einen Ende in ortsfest am zweiten Schlitten 6 angebrachten ersten Schwenklagern 8 aufgenommen. An ihrem anderen Ende sind die ersten Lenker 7 in ortsfest an einem Koppelelement 9 angebrachten zweiten Schwenklagern 10 schwenkbar gehalten. In Fig. 2 sind insbesondere die Schlitten 1, 6, die ersten Lenker 7 und das Koppelelement 9 in zwei unterschiedlichen Positionen gezeigt. Das Koppelelement 9, die Lenker 7 und der zweite Schlitten 6 bilden einen Parallelogrammstelltrieb PL. Dabei übernimmt der zweite Schlitten 6 die Funktion eines weiteren Koppelelements. Es ist selbstverständlich auch denkbar, dass ein solches weiteres Koppelelement (hier nicht gezeigt) vorgesehen ist, welches am zweiten Schlitten 6 angebracht ist.

Wie aus Fig. 1 weiter ersichtlich ist, ist der zweite Schlitten 6 in horizontaler Richtung gleitbar an einem horizontal verlaufenden Träger 11 angebracht. Der Träger 11 ist in Z-Richtung vertikal gleitbar in Z-Führungen 12 geführt. Ein zweiter Elektromotor 13 dient der vertikalen Bewegung des Trägers 11.

Mittels zweier der in Fig. 1 und 2 gezeigten Antriebsmodule AM ist es möglich, einen an den Koppelelementen 9 angebrachten Transportbalken in X- und Y-Richtung zum Transport von Werkstücken zu bewegen.

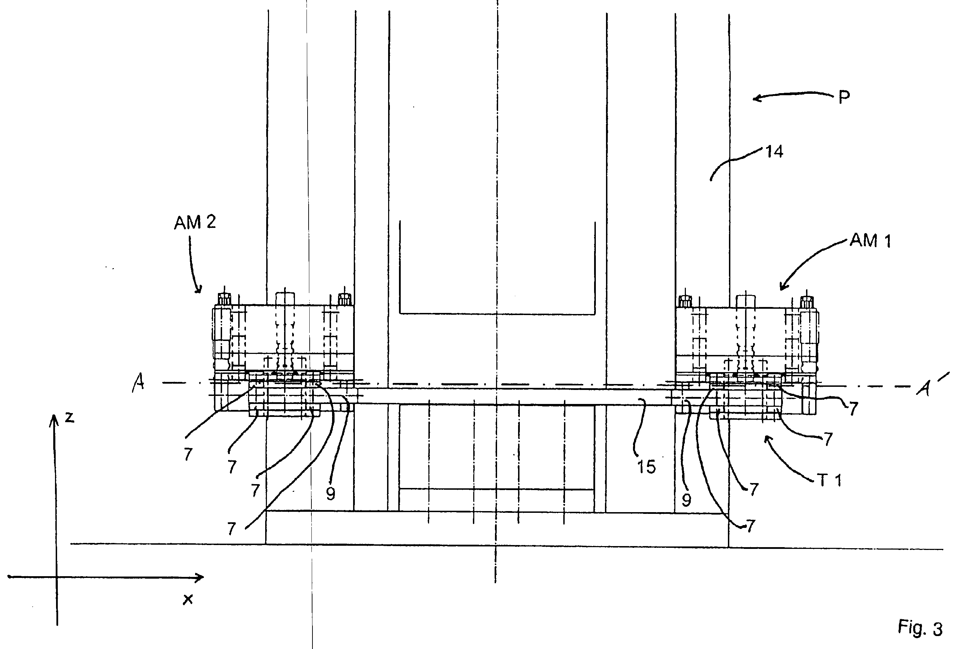

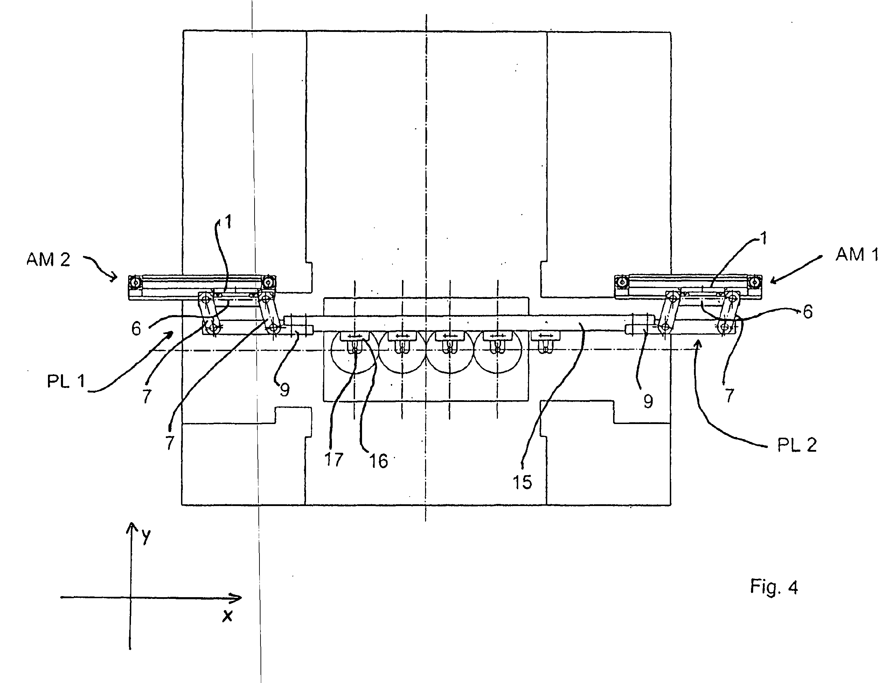

Die Fig. 3 und 4 zeigen eine erste Vorrichtung. Es handelt sich dabei um eine Transporteinrichtung T1, welche ein erstes AM1 und eine zweites Antriebsmodul AM2 aufweist. Die Antriebsmodule AM1, AM2 entsprechen dem in den Fig. 1 und 2 gezeigten Antriebsmodul AM. Das erste Antriebsmodul AM1 weist einen ersten PL1 und das zweite Antriebsmodul AM2 einen zweiten Parallelogrammstelltrieb PL2 auf. Die Antriebsmodule AM1, AM2 sind am Gestell 14 einer Presse P montiert. Die Koppelelemente 9 der Antriebsmodule AM1, AM2 sind mit einem Transportbalken 15 verbunden.

Wie insbesondere aus Fig. 4 ersichtlich ist, sind am Transportbalken 15 mehrere Greifeinrichtungen 16 angebracht. Derartige Greifeinrichtungen 16 können als Aktiv-Greifelemente ausgebildet sein. Sie dienen zum Greifen von Werkstücken 17 und weisen einen eigenen Antrieb auf.

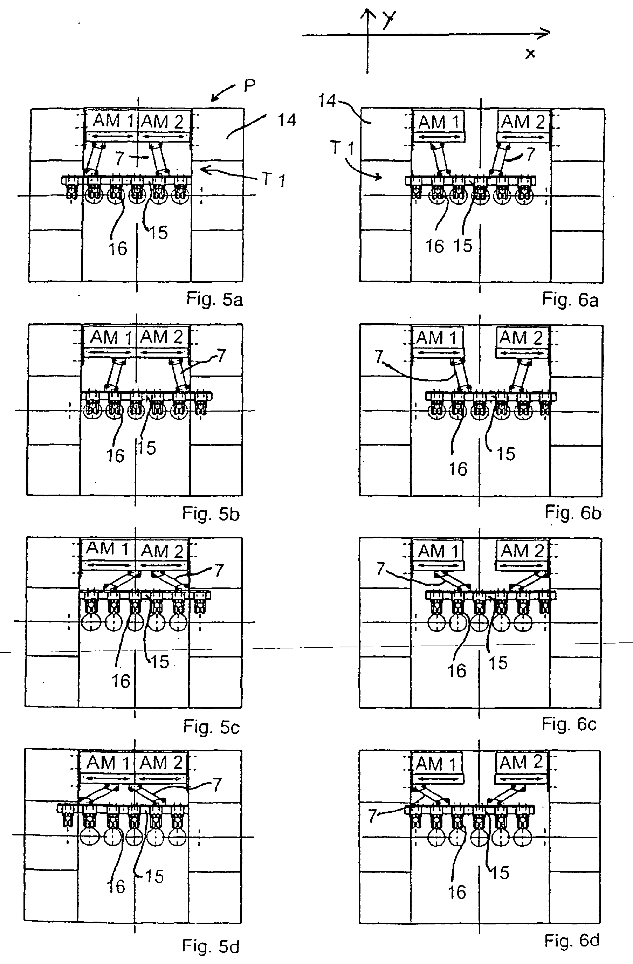

Die Fig. 5a bis 5d zeigen den Bewegungsablauf bei einer zweiten Vorrichtung zum Transport von Werkstücken 17. Dabei sind die Antriebsmodule AM1, AM2 innerhalb des Gestells 14 der Presse P angeordnet. Eine solche Anordnung ist besonders platzsparend. Zum Transport der Werkstücke 17 ist hier lediglich eine einzige Transporteinrichtung T1 vorgesehen. Am Transportbalken 15 sind Greifeinrichtungen 16 angebracht, die Aktiv-Greifelemente aufweisen. Die Fig. 5a bis 5d zeigen, dass durch eine geeignete Bewegungsführung der ersten Schlitten 1, eine Bewegung des Transportbalkens 15 sowohl in der Transport- bzw. X-Richtung als auch in einer senkrecht zur Transportrichtung verlaufenden Y-Richtung durchführbar ist. Es bedarf dazu lediglich einer geeigneten Steuerung der Bewegungen der ersten Schlitten 1 in X-Richtung.

Nach einer besonders vorteilhaften (hier nicht gezeigten) Ausgestaltung können die beiden Antriebsmodule AM1, AM2 kombiniert sein. Dabei können die ersten Schlitten 1 beider Antriebsmodule AM1, AM2 auf einer gemeinsamen Schiene eines Linearmotors geführt sein. Die gemeinsame Schiene bildet in diesem Fall ein gemeinsames Sekundärteil. Die beiden ersten Schlitten 1 bilden zwei Primärteile des Linearmotors. Sie können unabhängig voneinander auf dem Sekundärteil bewegt werden. Eine solche Ausgestaltung ist besonders platzsparend.

Die Fig. 6a bis 6d zeigen den Bewegungsablauf bei einer dritten Vorrichtung. Auch hier ist lediglich eine einzige Transporteinrichtung T1 vorgesehen. Die Antriebsmodule AM1, AM2 sind auch hier innerhalb des Gestells 11 der Presse P angebracht. Bei einer Anbringung der Antriebsmodule AM1,AM 2 innerhalb des Gestells 14 der Presse P können die Lenker 7 nicht an den Enden des Transportbalkens 15, sondern versetzt davon, zur Mitte des Transportbalkens 15 hin verschoben angebracht sein.

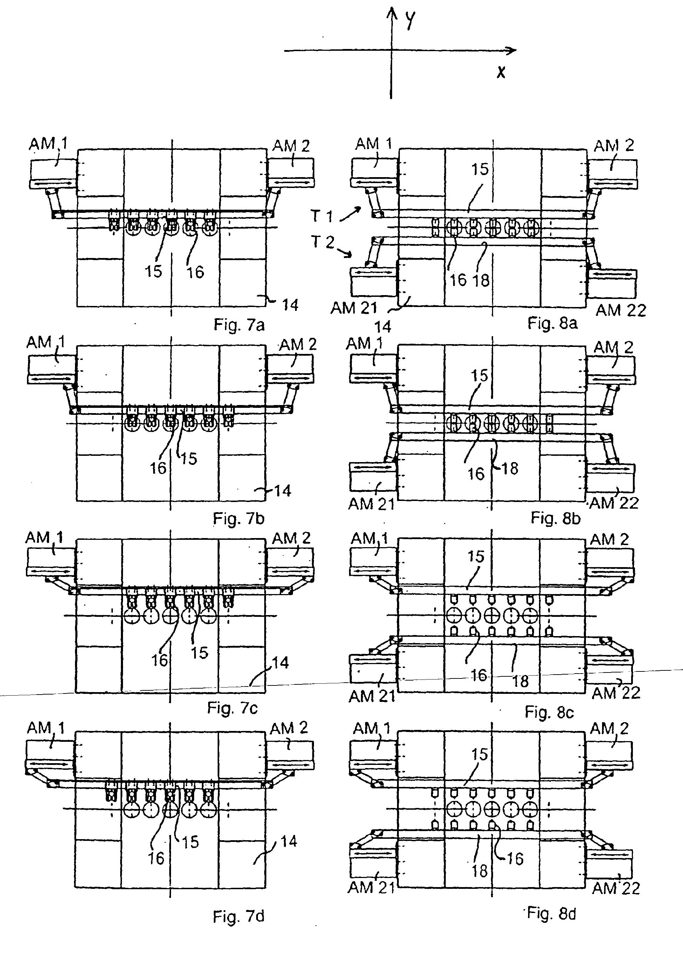

Die Fig. 7a bis 7d zeigen den Bewegungsablauf einer vierten Vorrichtung. Dabei sind die Antriebsmodule AM1, AM2 an der Außenseite des Gestells 14 der Presse P angebracht. Der Transportbalken 15 ist auch hier mit Greifeinrichtungen 16 versehen. Ein Transport der Werkstücke in die Transportrichtung ist auch hier durch eine geeignete koordinierte Bewegung der ersten Schlittens 1 in X-Richtung möglich.

Bei der in den Fig. 8a bis 8d gezeigten fünften Vorrichtung sind zwei Transporteinrichtungen T1 und T2 vorgesehen. Deren Antriebsmodule AM1, AM2 bzw. AM21, AM22 sind wiederum an der Außenseite des Gestells 14 angebracht. Der Transportbalken 15 und ein weiterer Transportbalken 18 sind in einer Ebene einander gegenüberliegend angeordnet. Die Transportbalken 15 bzw. 18 sind hier wiederum mit Greifeinrichtungen 16 versehen. In diesem Fall sind die Greifeinrichtungen 16 als so genannte Passiv-Greifelemente ausgeführt, d. h. sie sind in ihrer Form korrespondierend zur Form der zu transportierenden Werkstücke 17 ausgeführt. Dabei werden die Werkstücke 17 von zwei Greifelementen gegriffen, die mittels der Transportbalken 15, 18 aufeinander zu bewegt werden. Die Fig. 8a bis 8d zeigen den Bewegungsablauf bei der Verwendung zweier erfindungsgemäßer Transporteinrichtungen T1, T2. Zum Transport der Werkstücke 17 in X-Richtung ist es hier erforderlich, auch die Bewegungen der ersten Schlitten 1 der Antriebsmodule AM21 und AM22 der weiteren Transporteinrichtung T2 abgestimmt mit dem Bewegungen den ersten Schlitten 1 der Antriebsmodule AM1, AM2 der Transporteinrichtung T1 auszuführen. Die Steuerung der Bewegungen der ersten Schlitten 1 kann über eine programmgesteuerte Ansteuerung der jeweiligen Antriebseinrichtung, insbesondere der Elektromotoren erfolgen.

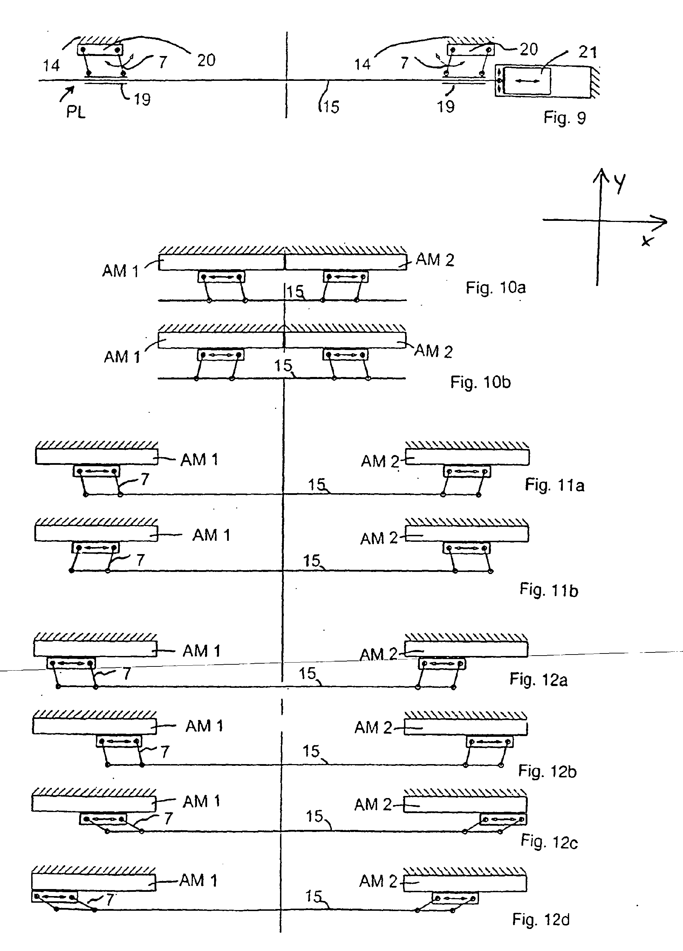

Fig. 9 zeigt als Prinzipskizze eine sechste Vorrichtung. Dabei sind zweite Schlitten 19 gleitbar am Transportbalken 15 gehalten. Die Lenker 7 sind hier in einem weiteren Koppelelement 20 schwenkbar gehalten, welches am Gestell 14 angebracht ist. Das Koppelelement 20 kann dabei in Z-Richtung bewegbar angebracht sein. Das weitere Koppelelement 20, die Lenker 7 und die zweiten Schlitten 19 bilden hier wiederum einen Parallelogrammstelltrieb PL. Bei der in Fig. 9 gezeigten sechsten Vorrichtung erfolgt die Bewegung des Transportbalkens 15 nicht durch eine aktive Bewegung der zweiten Schlitten 19, sondern durch eine außen liegende Antriebsvorrichtung 21, mit welcher der Transportbalken 15 sowohl in X- als auch in Y-Richtung bewegbar ist. Es kann aber auch sein, dass die zweiten Schlitten 19 jeweils eine Antriebseinrichtung zur Bewegung auf dem Transportbalken 15 aufweisen. Eine unerwünschte Durchbiegung des Transportbalkens 15 wird auch hier durch dessen Aufnahme mittels der erfindungsgemäßen Parallelogrammstelltriebe PL wesentlich verringert.

Die Fig. 10a zeigt eine alternative Anordnung der Lenker 7 bei der zweiten oder dritten Vorrichtung. Die Anordnung der Lenker 7 gemäß der zweiten Vorrichtung (siehe Fig. 5a bis 5d) ist in Fig. 10b wiedergegeben. In ähnlicher Weise zeigt Fig. 11a nochmals als Prinzipskizze die Anordnung der Lenker 7 der vierten Vorrichtung. In Fig. 11b ist eine alternative Anordnung der Lenker 7 wiedergegeben. In jedem Fall sind die Lenker 7 so angeordnet, dass sie bei einer Bewegung des Transportbalkens 15 in entgegengesetzte Richtungen verschwenkt werden.

Fig. 12a bis 12d zeigen nochmals den Bewegungsablauf bei der vierten Vorrichtung (siehe auch Fig. 7a bis 7d).

### Bezugszeichenliste

- 1: erster Schlitten
- 2: Zahnriemen
- 3: Zahnscheibe
- 4: erster Elektromotor
- 5: Z-Schiene
- 6: zweiter Schlitten
- 7: Lenker
- 8: erstes Schwenklager
- 9: Koppelelement
- 10: zweites Schwenklager
- 11: Träger
- 12: Z-Führung
- 13: zweiter Elektromotor
- 14: Gestell
- 15: Transportbalken
- 16: Greifeinrichtung
- 17: Werkstück
- 18: weiterer Transportbalken
- 19: zweiter Schlitten
- 20: weiteres Koppelelement
- 21: Antriebsvorrichtung

- T1: Transporteinrichtung
- T2: weitere Transporteinrichtung
- AM1, AM2: Antriebsmodule der ersten Transporteinrichtung
- AM21, AM22: Antriebsmodule der zweiten Transporteinrichtung
- P: Presse
- PL, PL1, PL2: Parallelogrammstelltrieb

## Patentansprüche

1. Vorrichtung zum Transport von Werkstücken (17)
mit mindestens einer an einem Gestell (14) einer Bearbeitungsvorrichtung (P) anbringbaren Transporteinrichtung (T1, T2), welche einen in X- und Y-Richtung bewegbar gehaltenen Transportbalken (15) aufweist,
**dadurch gekennzeichnet, dass**
der Transportbalken (15) mittels mindestens eines ersten und eines zweiten Parallelogrammstelltriebes (PL1, PL2) bewegbar gehalten ist,
wobei jeder der Parallelogrammstelltriebe (PL1, PL2) in gegenüberliegender Anordnung eine erstes Koppelelement (6, 20) und ein am Transportbalken (15) angebrachtes oder einen Bestandteil des Transportbalkens (15) bildendes zweites Koppelelement (9, 19) aufweist, welche über zumindest zwei parallel angebrachte Lenker (7) bewegbar miteinander verbunden sind,
und wobei die ersten und/oder zweiten Koppelelemente mittels einer Linearbewegungseinrichtung relativ zueinander in X-Richtung bewegbar sind, so dass zur Erzeugung einer Bewegung des Transportbalkens in Y-Richtung (15) die Lenker (7) eines ersten Parallelogrammstelltriebs (PL1) entgegengesetzt zu den Lenkern (7) eines zweiten Parallelogrammstelltriebs (PL2) verschwenkbar sind.

2. Vorrichtung nach Anspruch 1, wobei das erste Koppelelement (6, 20) an einer Linearbewegungseinrichtung angebracht oder Bestandteil derselben ist.

3. Vorrichtung nach einem der vorhergehenden Ansprüche, wobei das erste Koppelelement (6, 20) ein erstes Gleitelement (6) der Linearbewegungseinrichtung bildet.

4. Vorrichtung nach einem der vorhergehenden Ansprüche, wobei die Linearbewegungseinrichtung ein senkrecht zur Bewegungsrichtung des ersten Gleitelements (6) bewegbares zweites Gleitelement (1) aufweist, an welchem das erste Gleitelement (6) angebracht ist.

5. Vorrichtung nach Anspruch 3 oder 4, wobei das erste (6) und /oder zweite Gleitelement (1) ein auf einer Linearführung geführter Schlitten ist.

6. Vorrichtung nach einem der Ansprüche 3 bis 5, wobei das erste (6) und zweite Gleitelement (1) nach Art eines Kreuzschlittens ausgebildet sind.

7. Vorrichtung nach einem der Ansprüche 3 bis 6, wobei mindestens eine erste Antriebseinrichtung (13) zur Bewegung des ersten (1) und/oder zweiten Gleitelements (6), vorzugsweise in Z-Richtung, vorgesehen ist.

8. Vorrichtung nach einem der Ansprüche 3 bis 7, wobei mindestens eine zweite Antriebseinrichtung (4) zur Bewegung des ersten (1) und/oder zweiten Gleitelements (6), vorzugsweise in X-Richtung, vorgesehen ist.

9. Vorrichtung nach einem der Ansprüche 3 bis 8, wobei das erste (6) und/oder zweite Gleitelement (1) mittels eines Zahnriemens (3) mit der ersten (13) und/oder zweiten Antriebseinrichtung (4) verbunden ist.

10. Vorrichtung nach einem der Ansprüche 3 bis 9, wobei das erste (6) und/oder zweite Gleitelement (1) an einem Linearmotor angebracht sind.

11. Vorrichtung nach einem der vorhergehenden Ansprüche, wobei das zweite Koppelelement (9, 19) linear bewegbar am Transportbalken (15) angebracht ist.

12. Vorrichtung nach einem der vorhergehenden Ansprüche, wobei am Transportbalken (15) Greifeinrichtungen (16) zum Greifen der zu transportierenden Werkstücke (17) vorgesehen sind.

13. Vorrichtung nach einem der Ansprüche 3 bis 12, wobei zumindest eine Gleitführung zur Aufnahme der ersten (1) und/oder zweiten Gleitelemente (6) vorgesehen ist.

14. Vorrichtung nach Anspruch 13, wobei die Gleitführung/en am Gestell (14) einer Bearbeitungsvorrichtung (P) angebracht ist/sind.

15. Vorrichtung nach Anspruch 12 oder 13, wobei die Gleitführung/en innerhalb des Gestells (14) oder außerhalb am Gestell (14) angebracht ist/sind.

16. Vorrichtung nach einem der vorhergehenden Ansprüche, wobei gegenüberliegend der ersten Transporteinrichtung (T1), vorzugsweise in spiegelbildlicher Anordnung einer weitere Transporteinrichtung (T2) gemäß einem der vorhergehenden Ansprüche angeordnet ist.

## Claims

1. Device for the transport of work pieces (17)
with at least one transport unit (T1, T2) which can be mounted on a frame (14) of a processing device (P) the transport unit (T1, T2) having a transport bar (15) which is held movable in X and Y direction,
**characterized in that**
the transport bar (15) is held movable with at least one first and one second parallelogram actuating drive (PL1, PL2),
wherein each of the parallel actuating drives (PL1, PL2) has in vis-à-vis arrangement a first coupling element (6, 20) and a second coupling element (9, 19) mounted on the transport bar (15) or forming a part of the transport bar (15) which are movably connected to each other with at least two parallel-mounted steering elements (7),
and wherein the first and/or second coupling elements can be moved by a linear movement unit relative to the each other in X direction so that the steering elements (7) of a first parallelogram actuating drive (PL1) can be swung vis-à-vis to the steering elements (7) of a second parallelogram actuating drive (PL2) to generate a movement of the transport bar in Y direction (15).

2. Device as defined in claim 1, wherein the first coupling element (6, 20) is mounted on a linear movement unit or is part of same.

3. Device as defined in one of the preceding claims, wherein the first coupling element (6, 20) forms a first gliding element (6) of the linear movement unit.

4. Device as defined in one of the preceding claims, wherein the linear movement unit has a second gliding element (1) which can be moved vertically to the direction of the movement of the first gliding element (6) and on which the first gliding element (6) is mounted.

5. Device as defined in claim 3 or 4, wherein the first (6) and/or second gliding element (1) is a carriage which is guided on a linear guide.

6. Device as defined in one of the claims 3 to 5, wherein the first (6) and second gliding element (1) are formed like a cross carriage.

7. Device as defined in one of the claims 3 to 6, wherein at least one first drive unit (13) is provided for the movement of the first (1) and/or second gliding element (6), preferably in Z direction.

8. Device as defined in one of the claims 3 to 7, wherein at least one second drive unit (4) is provided for the movement of the first (1) and/or second gliding element (6), preferably in X direction.

9. Device as defined in one of the claims 3 to 8, wherein the first (6) and/or second gliding element (1) is connected via a toothed belt (3) with the first (13) and/or second drive unit (4).

10. Device as defined in one of the claims 3 to 9, wherein the first (6) and/or second gliding element (1) is mounted on a linear motor.

11. Device as defined in one of the preceding claims, wherein the second coupling element (9, 19) is linearly movably mounted on the transport bar (15).

12. Device as defined in one of the preceding claims, wherein gripping units (16) are provided on the transport bar (15) to grip the work pieces (17) to be transported.

13. Device as defined in one of the claims 3 to 12, wherein at least one glide guide is provided to retain the first (1) and/or second gliding elements (6).

14. Device as defined in claim 13, wherein the glide guide/guides is/are mounted on the frame (14) of a processing device.

15. Device as defined in claim 12 or 13, wherein the glide guide/guides is/are mounted inside the frame (14) or outside on the frame (14).

16. Device as defined in one of the preceding claims, wherein a further transport unit (T2) is located vis-à-vis from the first transport unit (T1), preferably in mirror-inverted arrangement, as provided by one of the preceding claims.

## Revendications

1. Dispositif pour le transport de pièces à usiner (17)
avec au moins un dispositif de transport (T1, T2) pouvant être monté sur un bâti (14) d'un dispositif d'usinage (P), dispositif de transport présentant une poutre de transport maintenue mobile (15) dans un sens X et Y,
**caractérisé en ce que**
la poutre de transport (15) est maintenue mobile par l'intermédiaire d'au moins un premier et un second actionneur à parallélogramme (PL1, PL2),
chacun des actionneurs à parallélogramme (PL1, PL2) présentant en disposition opposée un premier élément de couplage (6, 20) et un deuxième élément de couplage (9, 19) monté sur la poutre de transport (15) ou formant un élément de la poutre de transport (15), lesquels sont reliés de manière mobile par l'intermédiaire d'au moins deux leviers montés en parallèle (7),
et les premiers et/ou seconds éléments de couplage étant mobiles les uns par rapport aux autres dans les sens X par le biais d'un dispositif de déplacement linéaire de sorte que les leviers (7) d'un premier actionneur à parallélogramme (PL1) puissent pivoter dans un sens opposé aux leviers (7) d'un deuxième actionneur à parallélogramme (PL2) pour la génération d'un déplacement de la poutre de transport en sens Y (15) .

2. Dispositif selon la revendication 1, le premier élément de couplage (6, 20) étant monté sur un dispositif de déplacement linéaire ou étant un élément de ce dernier.

3. Dispositif selon l'une des revendications précédentes, le premier élément de couplage (6, 20) constituant un premier élément de coulissement (6) du dispositif de déplacement linéaire.

4. Dispositif selon l'une des revendications précédentes, le dispositif de déplacement linéaire présentant un deuxième élément de coulissement (1) se déplaçant verticalement par rapport au sens de déplacement du premier élément de coulissement (6), sur lequel est monté le premier élément de coulissement (6).

5. Dispositif selon la revendication 3 ou 4, le premier (6) et/ou le deuxième élément de coulissement (1) étant un chariot sur une glissière de guidage linéaire.

6. Dispositif selon l'une des revendications 3 à 5, le premier (6) et le deuxième élément de coulissement (1) étant réalisés sous forme d'un chariot à mouvements croisés.

7. Dispositif selon l'une des revendications 3 à 6, au moins un premier dispositif d'entraînement (13) étant prévu pour le déplacement du premier (1) et/ou du deuxième élément de coulissement (6), de préférence dans le sens Z.

8. Dispositif selon l'une des revendications 3 à 7, au moins un deuxième dispositif d'entraînement (4) étant prévu pour le déplacement du premier (1) et/ou du deuxième élément de coulissement (6), de préférence dans le sens X.

9. Dispositif selon l'une des revendications 3 à 8, le premier (6) et/ou le deuxième élément de coulissement (1) étant relié au premier (13) et/ou au deuxième dispositif d'entraînement (4) par l'intermédiaire d'une courroie dentée (3).

10. Dispositif selon l'une des revendications 3 à 9, le premier (6) et/ou le deuxième élément de coulissement (1) étant monté sur un moteur linéaire.

11. Dispositif selon l'une des revendications précédentes, le deuxième élément de couplage (9, 19) étant monté de manière à pouvoir décrire un déplacement linéaire sur la poutre de transport (15).

12. Dispositif selon l'une des revendications précédentes, des dispositifs de préhension (16) étant prévus sur la poutre de transport (15) pour saisir les pièces à usiner (17) devant être transportées.

13. Dispositif selon l'une de revendications 3 à 12, au moins un guidage par glissière étant prévu pour le logement des premiers (1) et/ou des deuxièmes éléments de coulissement (6).

14. Dispositif selon la revendication 13, le(s) guidage(s) par glissière étant monté(s) sur le bâti (14) d'un dispositif d'usinage (P).

15. Dispositif selon la revendication 12 ou 13, le(s) guidage(s) par glissière étant monté(s) dans le bâti (14) ou hors du bâti (14).

16. Dispositif selon l'une des revendications précédentes, un autre dispositif de transport (T2), de préférence inversé, opposé au premier dispositif de transport (T1) étant disposé selon l'une des revendications précédentes.
